Europäisches Patentamt

European Patent Office

Office européen des brevets

(11) Numéro de publication: **0 379 825**
**A2**

# (12) DEMANDE DE BREVET EUROPEEN

(21) Numéro de dépôt: **89430035.9**

(22) Date de dépôt: **28.11.89**

(51) Int. Cl.5: **B62D 21/00, B62D 33/02**

(30) Priorité: **28.11.88 FR 8816006**

(43) Date de publication de la demande:
**01.08.90 Bulletin 90/31**

(84) Etats contractants désignés:
**AT BE CH DE ES FR GB GR IT LI LU NL SE**

(71) Demandeur: **Maysonnave, J.P.**
**953, avenue Alfred Decugis**
**F-83400 Hyères(FR)**

(72) Inventeur: **Maysonnave, J.P.**
**953, avenue Alfred Decugis**
**F-83400 Hyères(FR)**

(54) **Cadre plancher de type cellulaire ridelles ou hayon système de fermeture ou d'ouverture automatique au bennage adaptable sur véhicule utilitaires.**

(57) Dispositif permettant le transport sur plateau articulé ou non articulé de toutes matières ou produits.

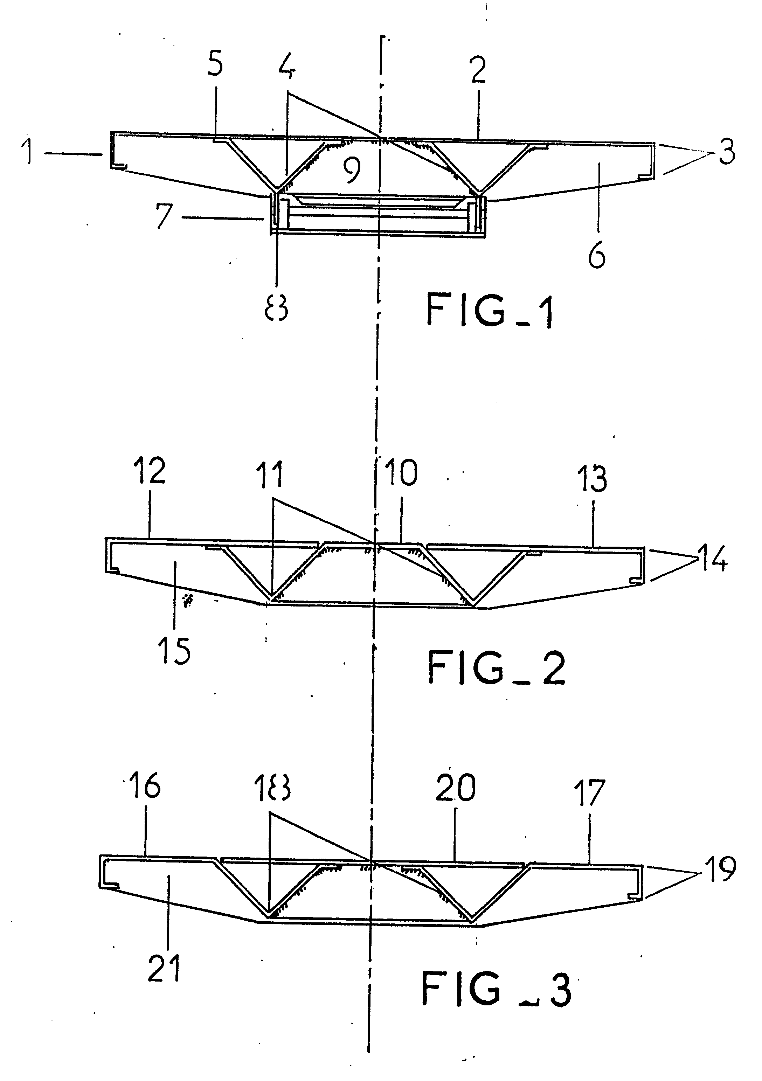

L'invention concerne un dispositif permettant de fabriquer un cadre plancher de type cellulaire, sans traverses, ni longerons classiques, permettant d'être assemblé dans un alliage léger ou métal ferreux.
Selon la figure 1, il est constitué d'un cadre plancher (1), ayant pour partie supérieure, le plancher (2) dont les deux extrémités latérales font l'objet de deux plis (3), constituant les côtés du plateau. La partie inférieure de la tôle plancher recevant la partie supérieure des deux gros V (4), constituant ainsi, d'une part, par leurs contacts supérieurs, les traverses de plancher (5) et par leurs parties inférieures, les longerons et son appui sur le châssis ou faux châssis (7).

Dispositif permettant la réalisation de ridelles ou hayon cellulaires, en alliage léger ou métaux ferreux.

L'invention concerne un dispositif permettant de réaliser des ridelles ou hayon ayant une surface intérieure plane dans un concept cellulaire permettant d'être réalisé dans un alliage léger ou un métal ferreux.

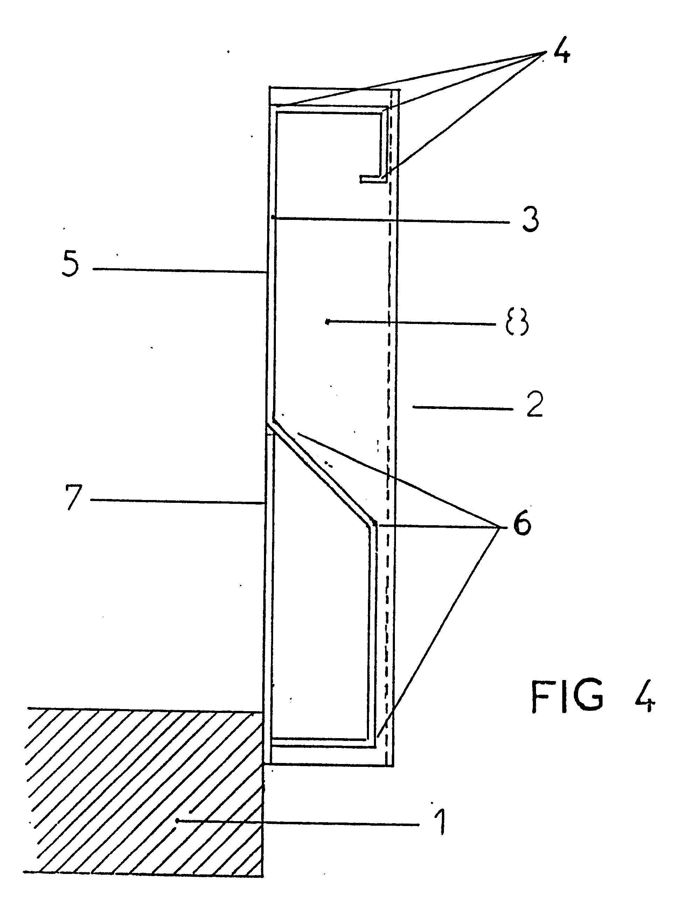

Il est constitué d'une tôle principale extérieure (3), sur laquelle a été façonné, sur la partie supérieure, trois plis rapprochés (4). La partie verticale supérieure (5) constituant la moitié environ de la surface parfaitement plane de l'intérieur de la ridelle est attenante à la partie inférieure faisant l'objet de trois plis consécutifs (6) créant un embrévement permettant l'adjonction d'une tôle plane (7) - figure 4.

Dispositif d'un système d'ouverture ou de fermeture automatique au bennage.

L'invention concerne un dispositif de systéme d'ouverture ou de fermeture automatique pouvant être construit et assemblé' dans différents métaux, frontalement, sur la partie arriére d'une benne.

Il est constitué d'un support (1) sur lequel est usiné une empreinte en forme de lumiére (2) servant de guide d'articulation, et dans sa partie inférieure, une surface plane (3) servant de butée à l'ouverture du hayon (4) et dans sa partie supérieure, un axe (5) permettant d'articuler son crochet (6) verrouillantle hayon (7).

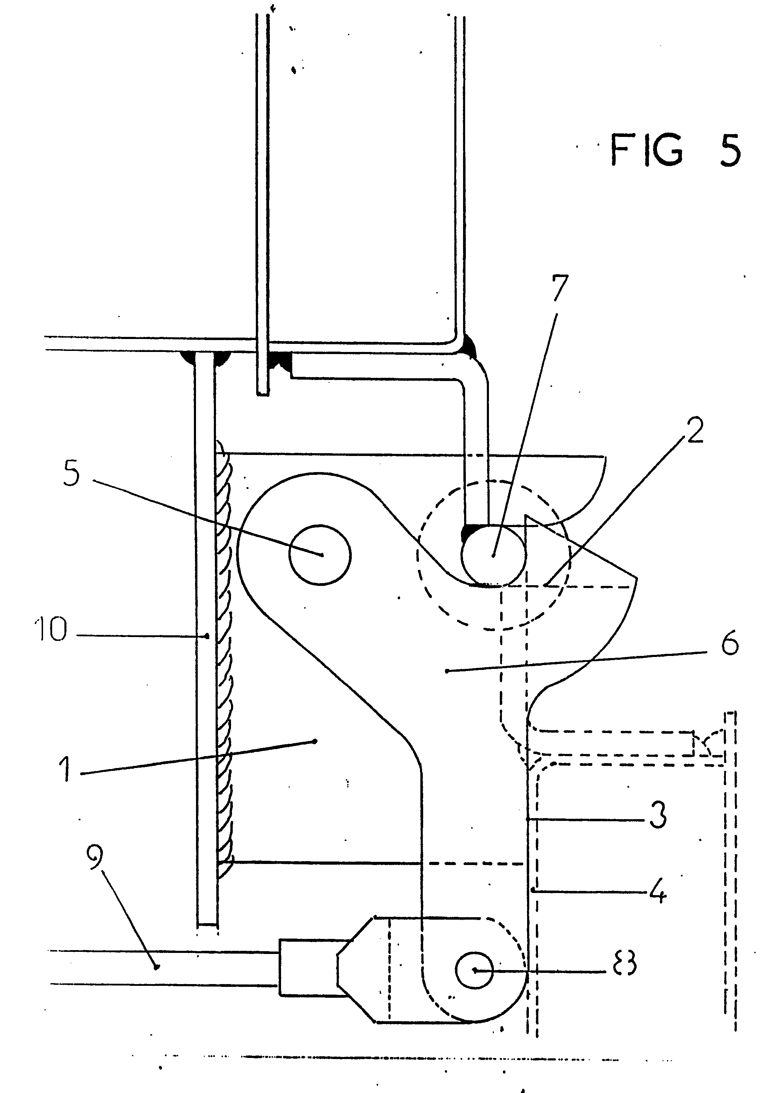

L'ensemble étant commandé par sa timonerie d'ouverture au bennage (9) - figure 5.

FIG_1

FIG 5

## Cadre plancher de type cellulaire, Ridelles ou hayon, Système de fermeture ou d'ouverture automatique au bennage, Adaptable sur véhicule utilitaire.

La présente invention concerne une nouvelle technique de conception et de fabrication du cadre plancher (plus communément appelé plateau), des ridelles ou hayon arrière, et du système d'ouverture ou de fermeture automatique dans le cas ou le plateau serait articulé à son extrémité arrière (faisant fonction de benne), dans l'utilisation de métaux légers ou ferreux, permettant une augmentation de rigidité au bennage, plus de légèreté et d'en diminuer son coût de fabrication.

Le cadre plancher appuyé sur son faux châssis, articulé à son extrémité, dans la version benne est traditionellement fabriqué à l'aide de deux longerons en forme de U sur lesquels sont soudés transversalement, un ensemble de traverses réparties à égale distance entr'elles, et sur lesquelles repose la tôle constituant la partie supérieure du plancher.

Cet ensemble cadre plancher n'a jamais, d'une part, constitué une grande rigidité au bennage, et d'autre part, créé une quantité de manipulations et d'opérations de soudures importantes.

Le nouveau concept selon l'invention, permet de remédier à tous ces inconvénients.

Il est formé en effet d'un cadre plancher supérieur, dont deux extrémités sont pliées par deux fois, constituant la rigidité latérale du plateau.

La surface inférieure de la tôle de plancher, divisée en cinq parties sur sa largeur, délimite les appuis des bords retombés des ailes, de deux grands V en tôle pliée de grande dimension, remplaçant les longerons ayant pour objet, d'une part, par sa partie supérieure, le remplacement du treillis de traverses, consolidant le plancher, d'autre part, par sa partie inférieure, l'appui sur le châssis ou sur le faux châssis, dans le cas d'une benne constituant par là même deux gros longerons cellulaires triangulaires, soudés, donnant une rigidité au cadre plancher.

A l'intérieur et perpendiculairement entre ces deux grands V (longerons), un V de même dimension ayant pour fonction, d'une part, dans le cas d'une benne de recevoir l'articulation supérieure du ou des verrins, et de rigidifier les deux longerons entr'eux, d'autre part, les appuis des ailes supérieures servent de traverse au plateau.

Les extrémités de cet ensemble, avant et arrière, sont fermées par une tôle soudée, servant de traverse, et ayant pour effet de constituer une cellule fermée de type "sandwich".

Selon une réalisation préférentielle, l'inventeur se réserve tous droits d'utiliser toutes les variantes d'assemblage de son invention concernant : La conception et la nouvelle technique de fabrication des infrastructures du cadre plancher, afin d'en diminuer le coût de fabrication, d'augmenter l'esthétique ou la solidité.

Le nouveau concept selon l'invention peut recevoir un pli de plus sur la partie inférieure du V (plus couramment appelé "longeron"). Celui-ci, aurait pour cause d'augmenter le prix et le poids dans sa réalisation et de diminer sa rigidité. Cette éventualité, ferait partie de l'invention et ne saurait en constituer une nouvelle.

Les dessins annexés illustrent l'invention.

Sur la planche 1,

la figure 1 représente en coupe la forme et l'assemblage du cadre plancher, selon l'invention avec son faux châssis, dans le cas d'une benne.

La figure 2 représente en coupe une variante de l'assemblage de l'invention.

La figure 3 représente en coupe une deuxième variante de l'assemblage de l'invention.

L'ensemble cadre plancher, avec son faux châssis représenté en coupe sur sa largeur dans le figure 1, comporte le cadre plancher (1) ayant pour partie supérierue le plancher (2) dont les deux extrémités latérales font l'objet de deux plis (3) constituant la rigidité des côtés du plateau.

La partie inférieure de la tôle plancher, recevant à quatre endroits, sur toute la longueur les parties supérieures de deux V en tôle pliée (4), divisant ainsi en cinq parties, la largeur de plancher constituant ainsi, d'une part, par leurs contacts supérieurs, les traverses de plancher (5), et par la partie inférieure, le longeron et son appui sur le faux châssis (7), et son articulation (8).

Une tôle en V de même hauteur (9) introduite, dans le centre du plateau perpendiculairement, entre les flancs des V constituant les longerons, a pour fonction, d'une part, de recevoir les supports d'articulation de verrin(s), et d'autre part de rigidifier les deux grands V entr'eux. La partie supérieure soudée sous le plancher, assume toujours la fonction de traverse de plancher.

La tôle avant et arrière (6) servant de traverse et de bouchon de fermeture, constitue ainsi un ensemble cellulaire d'une très grande rigidité après soudure.

Dans la variante d'assemblage selon la figure 2, le plancher divisé en trois parties, reçoit dans sa partie centrale (10) à chaque extrémité, les pliages qui constitueront le grand V (11) appelé plus communément "longeron".

Les parties latérales du plancher (12) et (13) sur lesquelles seront effectuées les deux plis (14) donnant la rigidité latérale du plateau.

La tôle avant et arrière (15) servant de traverse et de bouchon de fermeture, constitue ainsi un ensemble cellulaire d'une très grande rigidité après soudure.

Dans la variante d'assemblage selon la figure 3, le plancher supérieur est divisé en trois parties, recevant dans ses deux parties latérales (16) et (17), à chaque extrémités intérieures le pliages constituant le grand V (18), plus communément appelé "longeron", la partie extérieure recevant les deux plis (19) qui donneront la rigidité des côtés au plateau.

La partie centrale (20) n'étant qu'une tôle plane, constituant le reste du plateau.

La tôle avant et arrière (21), servant de traverse et de bouchon de fermeture, constitue ainsi un ensemble cellulaire d'une très grande rigidité après soudure.

Ridelles et hayon selon une fabrication traditionnelle. Le hayon et les ridelles sont confectionnés à partir de tôles d'acier, planes rigidifiées par l'application d'un cadre en profil, sur lesquelles on fixe charnières et fermetures. Ou dans une technique plus récente, par tôle ayant fait l'objet, de pliages successifs constituant une certaine rigidité. L'inconvénient étant d'une part, dans un cas, son coût de fabrication trop élevé, sa mauvaise présentation, et sa protection contre la corrosion.

Le deuxième cas, étant de ne posséder aucune cellule fermée constituant une rigidité suffisante à l'utilisation, dans sa réalisation en alliage léger, et une surface non plate à l'intérieur, créant des retenues de terre au bennage.

La forme selon l'invention permet de remédier à ces inconvénients. Elle comporte en effet une série de pliages, plus exactement : six. Trois supérieurs et trois inférieurs, constituant une forme particulière, donnant la possibilité par les trois plis inférieurs, de constituer une cellule fermée, par la simple adjonction d'une tôle plane intérieure soudée, ayant pour objet d'une part, de constituer une surface plane sur le flanc intérieur de la ridelle. De diminuer de moitié, sur la face de contact, avec les projections de corps au remplissage de la benne, diminuant d'autant la surface visuelle, susceptible d'être déformée, et d'autre part, de constituer une rigidité parfaite de la ridelle ou du hayon par celle-ci et de soudage d'un profil, servant d'appui aux extrémités.

Le dessin annexé planche 2 illustre l'invention.

L'ensemble ridelles ou hayon, avec son plancher représenté en coupe sur la figure 4, comporte : un plancher (1) en contact avec un ensemble ridelles ou hayon (2) constitué d'une tôle principale (3) sur lauelle a été façonné sur la partie supérieure trois plis rapprochés à 90° (4) rigidifiant la partie supérieure de la ridelle.

La partie verticale supérieure (5) constituant la moitié (environ) de la surface parfaitement plane à l'intérieur de la ridelle, est attenante de la partie inférieure faisant l'objet de trois plis consécutifs (6) ayant pour fonction de créer un embrèvement permettant la jonction d'une tôle plane (7) créant ainsi une surface totalement plane et lisse à l'intérieur du panneau.

La rigidité de l'ensemble étant obtenue par l'assemblage par soudure de la tôle (7) et du profil pouvant servir d'appui à chaque extrémités (8).

L'ouverture ou la fermeture arrière selon un concept traditionnel, est fixé au longeron sous le plancher de la benne et constitué de plusieurs pièces permettant d'une part l'ouverture automatique au bennage, d'autre part, l'ouverture du hayon, par basculement de celui-ci à 180° autour de son axe au niveau du plancher, donnant un passage total au plateau.

L'ensemble de fermeture est assuré par un crochet articulé à son extrémité, verrouillant le hayon par son axe, dans un guide bridant celui-ci, lui permettant de s'articuler sur sa partie inférieure. La difficulté étant la réalisation de ce système d'ouverture ou de fermeture, nécessitant l'ajustage de plusieurs pièces avant soudure.

Le dispositif selon l'invention permet de remédier à ces inconvénients d'une part, et de diminuer son coût de fabrication. Il est constitué en effet, d'un ensemble dont les formes particulières, et son principe de construction et de fonctionnement lui permette d'être assemblé en même temps.

L'aspect technique nouveau résulte au fait que la forme d'une seule pièce, lui permette d'être en même temps, support de mécanique et d'articulation de crochets, guide d'articulation du hayon, et la butée du hayon en ouverture manuelle. L'ensemble étant soudé frontalement sur la partie arrière de la benne.

Le pilotage automatique d'ouverture de hayon au bennage est assure par un système de timonerie classique muni d'un ressort de rappel permettant d'obtenir la position fermée du crochet au repos.

Le dessin annexé planche 3 illustre l'invention.

La figure 5 représente de face, le dispositif selon l'invention. Il comporte : son support (1), sur lequel est usiné une empreinte en forme de lumière (2) servant de guide pour articuler le hayon, et dans sa partie inférieure, une surface plane (3) parallèle à la partie de contact de support, servant de butée à l'ouverture de hayon (4) et dans sa partie supérieure, un axe (5) permettant d'articuler son crochet (6), verrouillant l'axe inférieur du hayon (7), commandé dans sa partie inférieure par un axe (8) recevant la timonerie (9) de commande d'ouverture automatique de bennage. L'ensemble étant soudé frontalement sur la partie arrière de la benne (10).

## Revendications

1° - Dispositif selon l'invention caractérisé en ce que l'ensemble cadre plancher, de concept cellulaire est constitué dans sa partie supérieure d'une tôle plane, et dans sa partie inférieure de deux gros V soudés, constituant d'une part, par leur partie supérieure, l'ensemble de traverses ayant pour objet de consolider le plancher et dans leur partie inférieure, les longerons prenant appui sur le châssis ou faux châssis.

2° - Dispositif selon la revendication 1, caractérisé en ce que la plateau du cadre plancher (2) - figure 1 - est formé à partir d'une même tôle pliée par deux fois à ses extrémités, constituant ainsi, la partie latérale du plateau (3).

3° - Dispositif selon la revendication 1 et la revendication 2 caractérisé en ce que deux grands V (4) - figure 1 - appelés plus communément longerons, sont appliqués et soudés, par leurs parties supérieures, à la partie inférieure du plancher, divisant celui-ci en cinq parties, constituant ainsi les appuis de traverses de plancher (5).

4° - Dispositif selon les revendications 1 et 3, caractérisé en ce qui concerne le même grand V (4) - figure 1 - par la partie inférieure, constitue le longeron, et son appui sur le châssis ou faux châsssis (7).

5° - Dispositif selon les revendications 1,2 et 3, caractérisé par une variante en ce que le plancher supérieur, divisé en trois parties sur sa largeur, reçoit dans sa partie centrale (10) figure 2 - à chaque extrémité, les pliages constituant le grand V (11) ou longeron, les deux parties latérales (12) et (13), ayant reçues les pliages (14) donnant la rigidité latérale du plateau.

6° - Dispositif selon les revendications 1, 2, 3 et 5, caractérisé par une troisième variante, en ce que le plancher supérieur divisé en trois parties dans sa largeur, reçoit dans ses deux parties latérales (16) et (17) - figure 3 - à chaque extrémité, les pliages constituant le grand V (18) ou longeron. La partie extérieure recevant les deux plis (19) donnant la rigidité latérale au plateau, la partie centrale (20) n'étant qu'une tôle plane soudée.

7° - Dispositif selon les revendications 1, 5 et 6, caractérisé en ce qu'éventuellement une tôle en V de même hauteur (9) figure 1 - assume la fonction de traverse de verrin(s) et rigidifie les deux grands V entr'eux. La partie supérieure assumant la fonction de traverse de plancher.

8° - Dispositif selon la revendication 1, ou les revendications 5 et 6, caractérisé en ce que la tôle avant et arrière (6),(15) et (21), serve de traverse avant et arrière de plancher, et de fermeture constituant une très grande rigidité après soudure.

9° - Dispositif selon qu'une ridelle ou hayon, en alliage léger ou ferreux, se caractérise par sa forme particulière, permettant d'obtenir, d'une part, une surface plane sur sa partie intérieure, et une partie inférieure cellulaire, donnant une grande rigidité à l'ensemble.

10° - Dispositif selon la revendication 9, caractérisé en ce que la ridelle, ou le hayon est constitué, dans sa partie intérieure par deux tôles (5) et (7), divisant sa hauteur en deux parties, à peu près égales, diminuant de moitié la surface visuelle extérieure.

11° - Dispositif selon les revendications 9 et 10, caractérisé en ce que la ridelle, ou le hayon, est constitué d'une tôle principale sur la partie extérieure (3) pliée six fois.

12° - Dispositif selon l'une quelconque des revendications précédentes, caractérisé en ce que la forme particulière de la tôle principale (3), permette par adjonction d'une tôle plane intérieure (7) et soudage d'un profil à ses extrémités (8), de constituer une cellule fermée.

13° - Dispositif selon un système d'ouverture ou de fermeture automatique, caractérisé dans sa réalisation en ce qu'une seule et unique pièce (1) - figure 5 - soit soudée frontalement à l'extérieur de la partie arrière du plateau (10), remplace plusieurs pièces et que la forme particulière de son crochet, lui permette un verrouillage d'une très grande qualité, assuré par des rapports de leviers.

14° - Dispositif selon la revendication 13, caractérisé en ce que ce support (1) - figure 5 - permette d'être en même temps support de crochet (6), guide d'articulation (2) et butée d'ouverture de hayon (3).

15° - Dispositif selon les revendications 13 et 14, caractérisé en ce que le crochet, dû à une forme ou des formes particulières permette un verrouillage efficace, capable de supporter une grande astreinte, dûe au rapport de levier, celui-ci pouvant être réalisé dans un alliage différent de son support extérieur.

16° - Dispositif selon que l'une quelconque des revendications précédentes, caractérisé en ce que les formes particulières d'assemblage, n'ont pour effet, que de diminuer son coût de fabrication, de permettre la réalisation de produits dans un alliage léger ou éventuellement un métal ferreux, ayant pour fonction, le transport de toutes matières, et ce dit sur un plateau articulé ou non articulé.

FIG_1

FIG_2

FIG_3

FIG 4

FIG 5

EP 0 379 825 A2